# FASCICULE DE BREVET EUROPEEN

(11) **EP 0 624 503 B1**
(45) Date de publication et mention de la délivrance du brevet: **16.07.1997**
(21) Numéro de dépôt: 94401024.8
(22) Date de dépôt: 09.05.1994
(51) Int. Cl.: B61D 19/00, B60J 5/06, B62D 33/02

(54) **Jupe d'ouverture et de fermeture de bas de caisse de véhicule**
Klappe zum Schliessen einer Öffnung im unteren Teil eines Wagenkastens
Flap for closing an opening in the lower part of a vehicle body

(30) Priorité: 14.05.1993 FR 9305837
(43) Date de publication de la demande: 17.11.1994
(73) Titulaire: GEC ALSTHOM TRANSPORT SA, 75016 Paris (FR)
(72) Inventeur: Guedon, Patrick, F-17440 Aytre (FR); Bretaud, Stephane, F-17340 Chatelaillon Plage (FR)
(74) Mandataire: Fournier, Michel

(56) Documents cités:
- EP-A- 0 043 178
- FR-A- 840 549
- GB-A- 2 057 544
- US-A- 2 226 033
- US-A- 3 416 836

## Description

La présente invention concerne les jupes d'ouverture et de fermeture de bas de caisse de véhicule permettant l'accès à au moins un compartiment pour équipement et porte, plus particulièrement, sur une jupe pliable et débarquable d'ouverture et de fermeture de bas de caisse de véhicule.

La demanderesse a déjà réalisé pour des trains à grande vitesse des jupes mobiles de protection de compartiments pour équipement munies d'un axe d'articulation à leur extrémité inférieur et d'un verrou de blocage sur la paroi de la caisse du véhicule, et pivotant pour leur ouverture autour de l'articulation jusqu'à une position horizontale, où elles sont maintenues par un bras de retenue.

Un inconvénient des jupes de l'art antérieur est qu'elles présentent un encombrement latéral notable en position ouverte, et que l'accessibilité, notamment de la partie basse, des compartiments n'est pas très bonne.

Cet inconvénient est encore accentué lorsque la jupe est destinée à un compartiment dont l'ouverture d'accès est de grande dimension.

Le document EP 0 043 178 décrit une jupe d'ouverture et de fermeture d'une plateforme d'un véhicule comportant les caractéristiques définies dans le préambule de la revendication 1.

La présente invention a pour but la réalisation d'une jupe d'ouverture et de fermeture de bas de caisse de véhicule qui permette, malgré un important débattement latéral à l'ouverture du fait d'une ouverture d'accès de grande dimension, une très bonne accessibilité aux compartiments.

L'invention a pour objet une jupe d'ouverture et de fermeture de bas de caisse de véhicule comprenant un abattant susceptible de basculer autour d'une articulation fixée à son bord inférieur et d'être maintenu par verrouillage en position fermée, comprenant:
- un premier et un second battant comportant des seconds moyens d'articulation fixés au bord inférieur du premier battant et au bord supérieur du second battant, ledit second battant comportant des premiers moyens d'articulation fixés sur le bord inférieur du second battant et destinés à être reliés à une caisse de véhicule,
   ladite jupe étant caractérisée par:
- des premiers moyens de verrouillage fixés soit uniquement sur le premier battant, soit uniquement sur le second battant, soit sur le premier et le second battant,
- des deuxièmes moyens de verrouillage fixés sur le premier et le second battants, par exemple sur le bord inférieur du premier battant et sur le bord supérieur du second battant, lesdits deuxièmes moyens de verrouillage étant destinés à autoriser un positionnement défini du premier battant par rapport au second battant, et
- des troisièmes moyens de verrouillage fixés sur le second battant et sur le premier battant de manière à assurer le verrouillage des battants une fois repliés l'un sur l'autre,
- L'abattant peut bien être débarquable.

D'autres buts et avantages de la présente invention apparaîtrons plus clairement à la lecture de la description d'une jupe d'ouverture et de fermeture conforme à l'invention, description faite en relation avec les dessins dans lesquels:
- la figure 1 est une vue extérieure de face de la jupe d'ouverture et de fermeture de l'invention;
- la figure 2 est une vue en coupe de la jupe d'ouverture et de fermeture en position fermée;
- la figure 3 est une vue en coupe de la jupe d'ouverture et de fermeture dans laquelle les battants supérieur et inférieur sont en position ouverte;
- la figure 4 est une vue en coupe de la jupe d'ouverture et de fermeture dans laquelle les battants supérieur et inférieur sont pliés l'un sur l'autre en position ouverte.

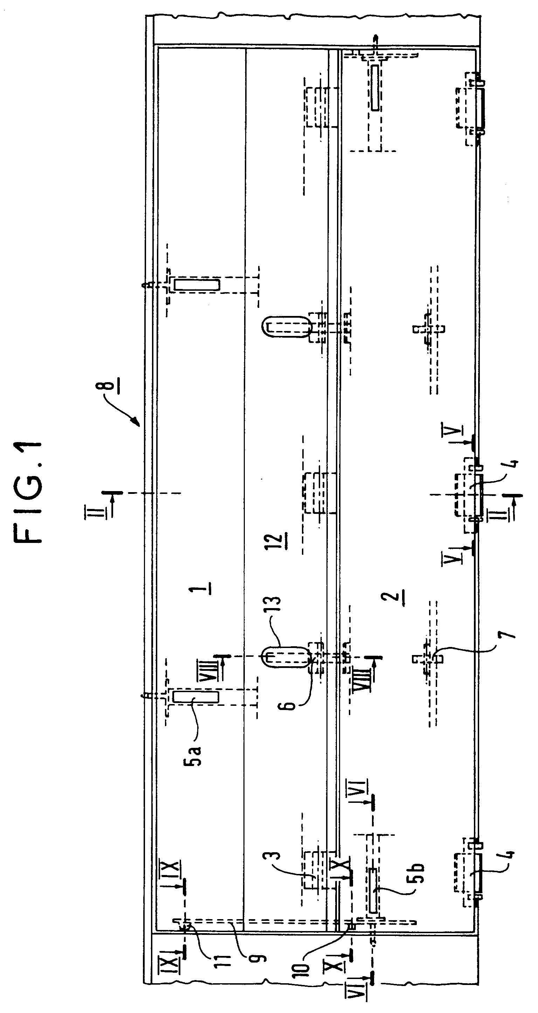

La figure 1 est une vue extérieure de face de la jupe d'ouverture et de fermeture de l'invention. La jupe se compose d'une partie mobile susceptible d'être rabattue, ci-après dénommée abattant 1, 2. L'abattant 1, 2 est susceptible de basculer à l'aide de premiers moyens d'articulation 4 fixés au bord inférieur de l'abattant et à la caisse du véhicule 8. L'abattant est susceptible d'être maintenu en position fermée à l'aide de premiers moyens de verrouillage 5a, 5b fixés sur l'abattant et coopérant avec la caisse du véhicule.

Selon une caractéristique essentielle de l'invention l'abattant se compose d'un premier 1 et d'un second 2 battants repliables l'un sur l'autre en position ouverte.

Pour ce faire, le premier et le second battants comportent des seconds moyens d'articulation 3 fixés au bord inférieur du premier battant 1 et au bord supérieur du second battant 2. Ce second battant 2 comporte alors les premiers moyens d'articulation 4 fixés sur le bord inférieur et sur la caisse sur du véhicule.

Ces premiers moyens de verrouillage 5a, 5b sont fixés soit uniquement sur le premier battant, soit uniquement sur le second battant, soit sur le premier et le second battant.

Des deuxièmes moyens de verrouillage 6 sont fixés sur le premier et le second battants, par exemple sur le bord inférieur du premier battant et sur le bord supérieur du second battant. Ces deuxièmes moyens de verrouillage 6 sont destinés à autoriser le positionnement du premier battant sur le second battant.

Des troisièmes moyens de verrouillage 7 sont fixés sur le second battant 2 et sur le premier battant 1 de manière à assurer le verrouillage des battants l'un sur l'autre.

Des moyens de retenue 9 sont fixés par leur seconde extrémité 10 sur l'abattant et par leur première extrémité 11 sur des moyens de guidage fixés sur la caisse du véhicule de manière à ce que la seconde extrémité 10 des moyens de retenue 9 permette à ces moyens de retenu de pivoter et de manière à ce que la première extrémité 11 des moyens de retenue puisse coulisser le long des moyens de guidage.

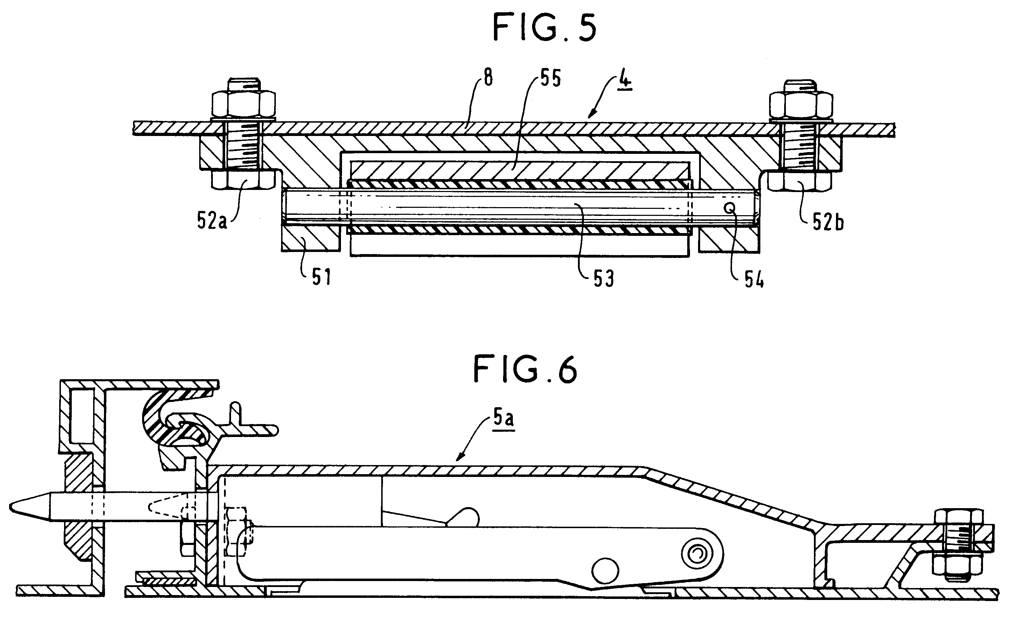

Des joints d'étanchéité (71, fig.6-10) coopérent avec le pourtour de l'ouverture d'accès du compartiment de manière à assurer l'étanchéité entre le premier 1 et le second 2 battants et le pourtour de l'ouverture d'accès du compartiment.

Des joints d'étanchéité disposés sur le bord inférieur du premier battant ou sur le bord supérieur du second battant, coopérent avec le bord supérieur du second battant ou avec le bord inférieur du premier battant, de manière à assurer l'étanchéité entre les bords inférieur et supérieur du premier et du second battants.

Un pare-choc 12 est fixé sur la longueur du premier battant. Des moyens de préhension 13 sont pratiqués à travers le pare-choc de manière à permettre la manipulation de l'abattant 1, 2 et à pouvoir accéder à la partie des deuxièmes moyens de verrouillage 6 fixés sur le premier battant 1.

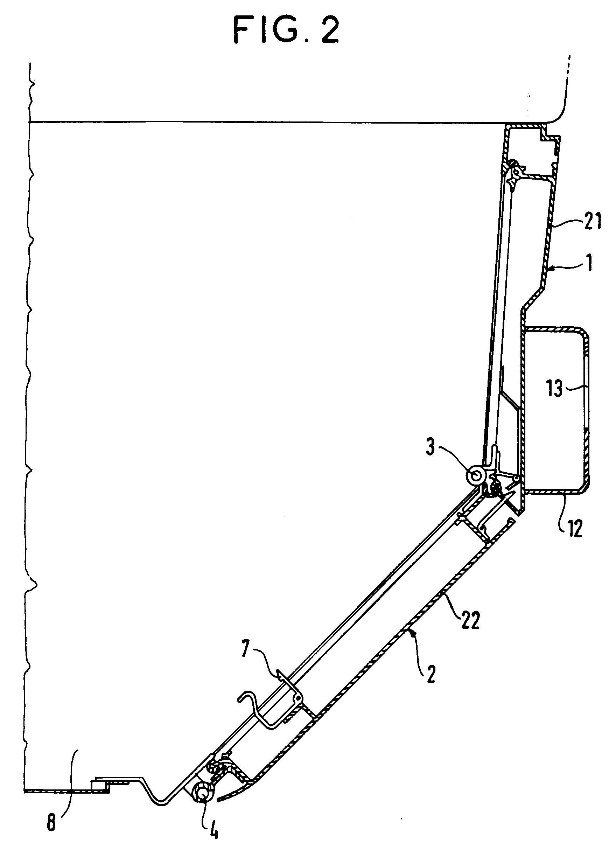

La figure 2 est une vue en coupe de la jupe d'ouverture et de fermeture en position fermée.

Selon le mode de réalisation représenté, le premier 1 et le second 2 battants constituant l'abattant comportent chacun un panneau 21 et 22, respectivement. Dans la coupe représentée à la figure 2 sont visibles: la caisse 8 du véhicule, le pare-choc 12 et ses moyens de préhension 13, les premiers moyens d'articulation 4, les troisièmes moyens de verrouillage 7 et les seconds moyens d'articulation 3; les deuxièmes moyens de verrouillage 6 ont également été représentés sur cette coupe.

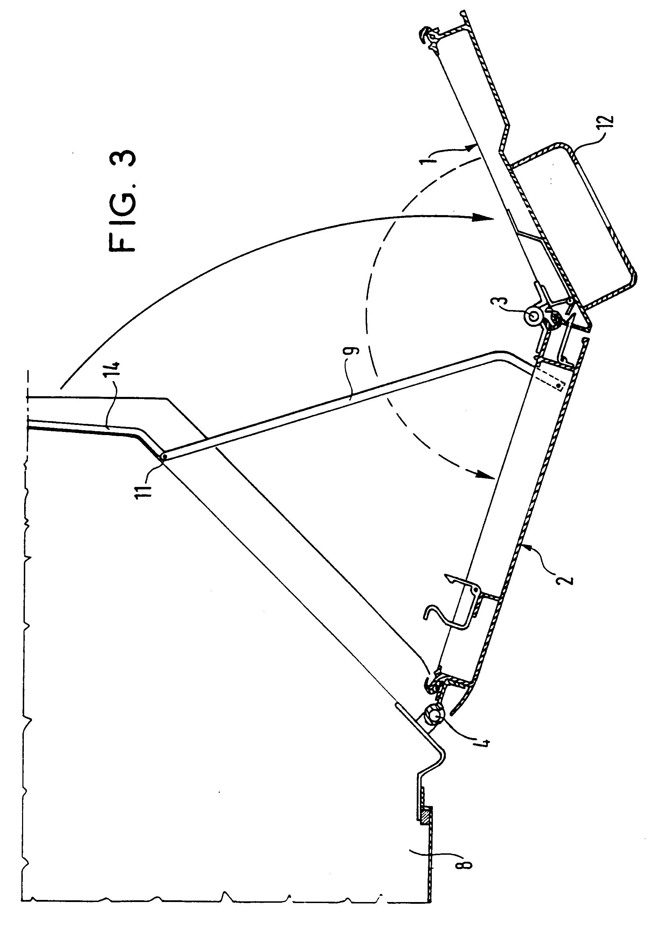

L'ensemble de ces éléments est repris à la figure 3, l'abattant étant en position ouverte.

Dans cette figure 3, la première extrémité 11 des moyens de retenue 9 a coulissé le long des moyens de guidage 14 pour venir en butée à l'extrémité basse de ceux-ci, alors que la seconde extrémité 10 des moyens de retenu 9 autorisait la rotation de ces derniers. L'abattant est donc en position ouverte et est retenu par les moyens de retenu.

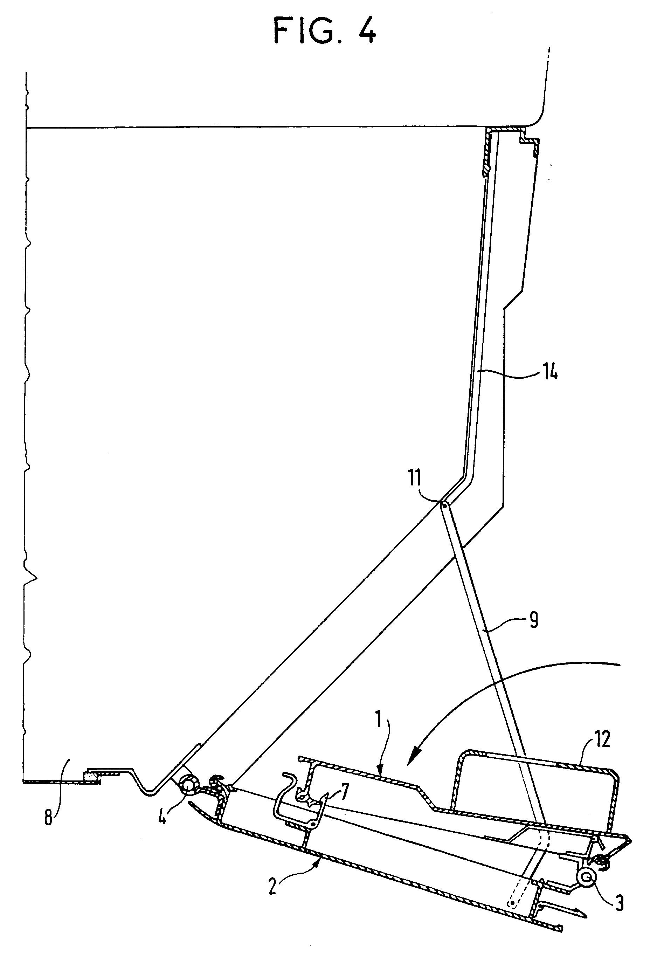

L'ensemble des éléments précédents est également représenté à la figure 4, l'abattant 12 étant en position ouverte et le premier 1 et le second 2 battants étant pliés l'un sur l'autre. Pour ce faire, les deuxièmes moyens de verrouillage 6 ont été actionnés manuellement permettant ainsi au premier battant 1 de pivoter en direction du compartiment et pour venir se placer, après pivotement, sur le second battant 2. Les troisièmes moyens de verrouillage 7 sont alors actionnés par le poids du premier battant de manière à maintenir le premier battant sur le second battant.

Une fois l'abattant dans cette position, il est alors facile conformément à l'invention de débarquer ce dernier. Pour ce faire, la première extrémité 11 des moyens de retenu 9 est déconnectée de l'extrémité basse des moyens de guidage 14 par simple décrochage et les premiers moyens d'articulation 4 du type gond et anneau semi-ouvert sont désolidarisés l'un de l'autre. Les moyens de retenu 9 sont disposés sur le côté des premier 1 et second 2 battants. L'abattant peut alors aisément être transporté par les moyens de préhension 13 disposés sur le pare-choc 12.

La figure 5 représente une coupe longitudinale des premiers moyens d'articulation 4. Selon ce mode de réalisation, les premiers moyens d'articulation comprennent un support 51, fixé par deux dispositifs du type vis écrous 52a, 52b sur la caisse 8 du véhicule, sur lequel est maintenu un axe de rotation 53 par un système de goupilles 54.

Le second battant 2 est positionné libre en rotation sur cet axe par une connexion par crochet 55. Le bord inférieur du second battant peut comporter plusieurs articulations selon cette réalisation.

La figure 6 représente une coupe longitudinale des premiers moyens de verrouillage 5a, 5b. Ces premiers moyens de verrouillage sont par exemple des moyens connus décrit dans l'art antérieur.

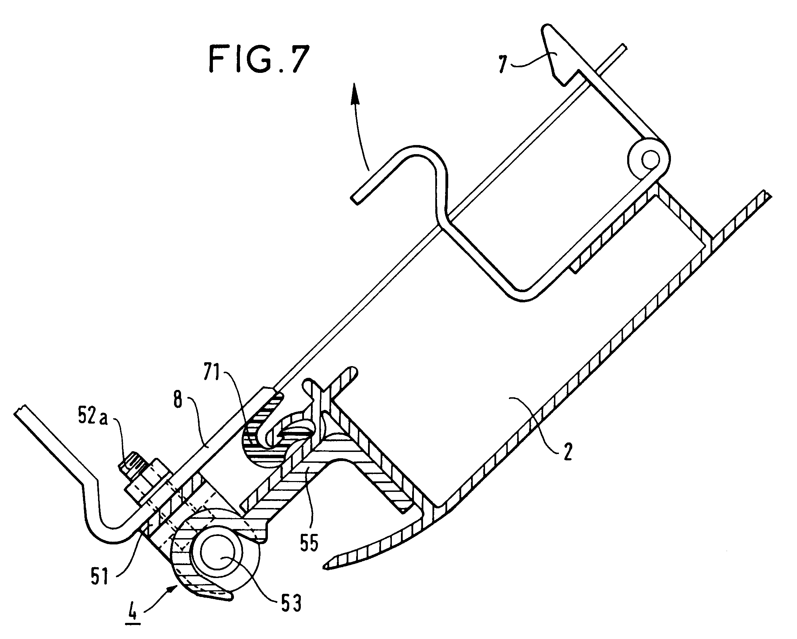

La figure 7 représente une vue de côté en coupe de l'extrémité inférieure du second battant 2. Cette figure 7 représente les premiers moyens d'articulation 4 et les troisièmes moyens de verrouillage 7. On distingue à nouveau le support 51 fixé par deux dispositifs du type vis écrous 52a, 52b sur la caisse 8 du véhicule et son axe de rotation 53, ainsi que le second battant 2 solidaire de sa connexion par crochet 55. On distingue également les joints d'étanchéité 71 décrit en liaison avec la figure 1.

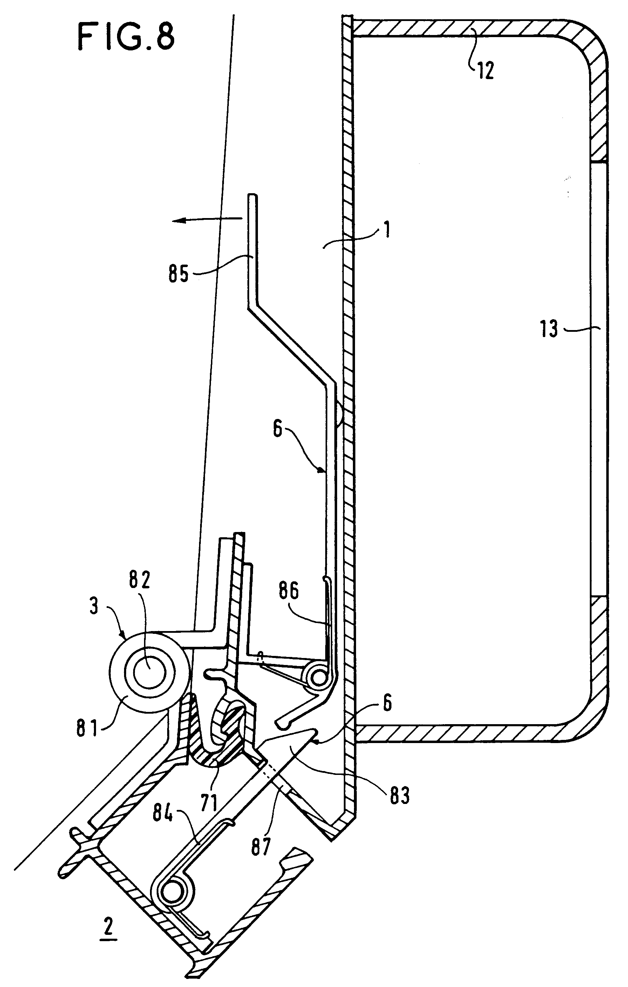

La figure 8 représente une vue de côté en coupe de la zone d'articulation entre le premier 1 et le second 2 battant. Cette figure 8 représente les deuxièmes moyens de verrouillage 6 et les seconds moyens d'articulation 3. On distingue un anneau de rotation 81 fixé au premier battant 1 et son axe de rotation 82 fixé au second battant 2 constituant les seconds moyens d'articulation 3. On distingue également le joint d'étanchéité 71 décrit en liaison avec la figure 1. Les deuxièmes moyens de verrouillage 6 comprennent un crochet 83 fixé sur le second battant et articulé par un premier ressort 84 ainsi qu'une tige de commande 85 fixé sur le premier battant et articulé par un second ressort 86. Le crochet 83 est en prise avec le premier battant 1 au moyen d'une ouverture 87 susceptible d'être libéré suite à une rotation de la tige de commande 85 obtenue après traction sur cette dernière. Il en résulte que le premier battant 1 est susceptible de pivoter pour venir se positionner sur le second battant 2.

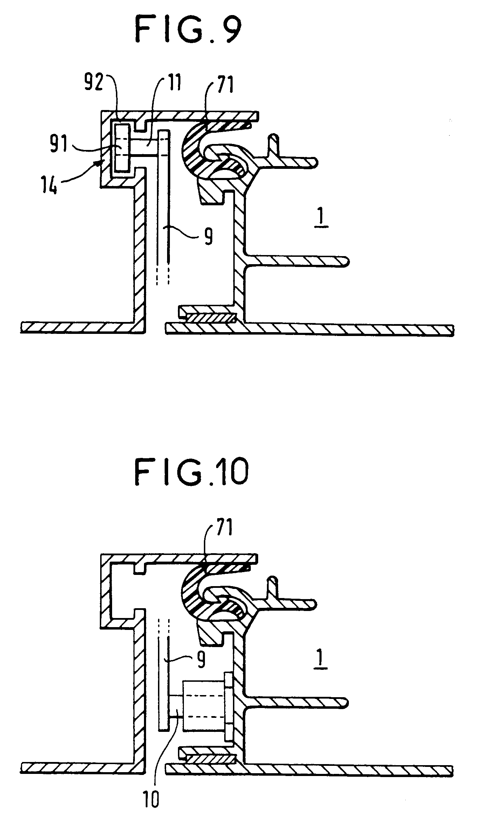

Les figures 9 et 10 représentent une coupe longitudinale, respectivement de la première 11 et de la seconde 10 extrémité des moyens de retenu 9.

La première extrémité 11 des moyens de retenu 9 est représentée dans son moyen de guidage 14. Cette première extrémité se compose par exemple d'un galet 91 coopérant avec une rainure 92 de manière à coulisser librement le long de celle-ci. La seconde extrémité 10 des moyens de retenu 9 est fixée sur le premier 1 battant de manière à ce que les moyens de retenu puissent pivoter librement selon une position pratiquement perpendiculaire aux battants. On distingue sur chacune de ces figures les joints d'étanchéité 71 décrits en liaison avec la figure 1.

Conformément au mode de réalisation décrit, l'accès au compartiment par l'ouverture d'accès s'effectue selon la procédure suivante:
- ouverture des premiers moyens de verrouillage 5a, 5b fixés sur le premier 1 et/ou sur le second 2 battant;
- basculement de l'ensemble de l'abattant, constitué du premier battant 1 solidaire du second battant 2 et disposé dans le prolongement de celui-ci, jusqu'à ce qu'il se positionne à peut près horizontalement maintenu dans cette position par des moyens de retenu 9;
- traction sur les deuxièmes moyens de verrouillage 6, plus particulièrement sur la tige de commande 85, de manière à libérer le crochet 83;
- pivotement du premier battant 1 en direction du second 2 jusqu'à ce que les troisièmes moyens de verrouillage 7 maintiennent le premier battant sur le second battant.

Si toutefois l'accès au compartiment doit être total, l'abattant est susceptible d'être débarqué. Pour ce faire, il est nécessaire de déconnecter la première extrémité 11 des moyens de retenu 9 de leurs moyens de guidage 14, puis de désarticuler les premiers moyens d'articulation 4. Il est alors possible de transporter l'abattant, rabattu selon un encombrement minime, à l'aide des moyens de préhension 13.

L'opération de remontage de l'abattant se fait aisément selon une procédure inverse.

## Revendications

1. Jupe d'ouverture et de fermeture de bas de caisse de véhicule comprenant un abattant (1, 2) susceptible de basculer autour d'une articulation (4) fixée à son bord inférieur et d'être maintenu par verrouillage en position fermée, comprenant:
- un premier (1) et un second (2) battant comportant des seconds moyens d'articulation (3) fixés au bord inférieur du premier battant (1) et au bord supérieur du second battant (2), ledit second battant comportant des premiers moyens d'articulation (4) fixés sur le bord inférieur du second battant et destinés à être reliés à une caisse de véhicule (8), ladite jupe étant caractérisée par:
- des premiers moyens de verrouillage (5a, 5b) fixés soit uniquement sur le premier battant, soit uniquement sur le second battant, soit sur le premier et le second battant,
- des deuxièmes moyens de verrouillage (6) fixés sur le premier et le second battants, par exemple sur le bord inférieur du premier battant et sur le bord supérieur du second battant, lesdits deuxièmes moyens de verrouillage étant destinés à autoriser un positionnement défini du premier battant par rapport au second battant, et
- des troisièmes moyens de verrouillage (7) fixés sur le second battant et sur le premier battant de manière à assurer le verrouillage des battants une fois repliés l'un sur l'autre.

2. Jupe d'ouverture et de fermeture selon la revendication 1 dans laquelle des moyens de retenu (9) sont fixés par leur seconde extrémité (10) sur le second battant (2) et par leur première extrémité (11) sur des moyens de guidage (14) fixés sur la caisse (8) du véhicule de manière à ce que la seconde extrémité (10) des moyens de retenu (9) permette à ces moyens de retenu de pivoter et de manière à ce que la première extrémité (11) des moyens de retenu (9) puisse coulisser le long des moyens de guidage (14).

3. Jupe d'ouverture et de fermeture selon la revendication 2 dans laquelle des joints d'étanchéité (71) coopérent avec le pourtour de l'ouverture d'accès du compartiment de manière à assurer l'étanchéité entre le premier et le second battants et le pourtour de l'ouverture d'accès du compartiment.

4. Jupe d'ouverture et de fermeture selon la revendication 3 dans laquelle des joints d'étanchéité (71), disposés sur le bord inférieur du premier battant ou sur le bord supérieur du second battant, coopérent avec le bord supérieur du second battant ou avec le bord inférieur du premier battant, de manière à assurer l'étanchéité entre les bords inférieur et supérieur du premier et du second battants.

5. Jupe d'ouverture et de fermeture selon la revendication 4 dans laquelle un pare-choc (12) est fixé sur la longueur du premier battant, des moyens de préhension (13) étant pratiqués à travers le pare-choc de manière à permettre la manipulation de l'abattant et à pouvoir accéder à la partie (85) des deuxièmes moyens de verrouillage (6) fixés sur le premier battant.

6. Jupe d'ouverture et de fermeture selon l'une quelconque des revendications précédentes dans laquelle l'abattant est débarquable.

## Claims

1. A skirt for opening and closing the bottom of a vehicle body, the skirt comprising a flap (1, 2) that can swing about a hinge (4) fixed to its bottom edge and that can be held by locking in the closed position, which flap comprises:
first and second leaves (1, 2) provided with second hinge means (3) fixed to the bottom edge of the first leaf (1) and to the top edge of the second leaf (2), said second leaf being provided with first hinge means (4) fixed to the bottom edge of the second leaf and for connection to a vehicle body (8), said skirt being characterized by:
first locking means (5a, 5b) fixed to the first leaf only, to the second leaf only, or both to the first leaf and to the second leaf;
second locking means (6) fixed to the first and second leaves, e.g. to the bottom edge of the first leaf and to the top edge of the second leaf, said second locking means serving to enable the first leaf to be positioned in a defined position relative to the second leaf; and
third locking means (7) fixed to the second leaf and to the first leaf so as to lock the leaves once they have been folded up one on the other.

2. An opening and closing skirt according to claim 1, in which retaining means (9) are fixed via their second end (10) to the second leaf (2), and via their first end (11) to the guide means (14) fixed to the body (8) of the vehicle, so that the second end (10) of the retaining means (9) enables said retaining means to pivot so that the first end (11) of the retaining means (9) can slide along guide means (14).

3. An opening and closing skirt according to claim 2, in which sealing gaskets (71) co-operate with the periphery of the access opening of the compartment so as to provide sealing between the first and second leaves and the periphery of the access opening of the compartment.

4. An opening and closing skirt according to claim 3, in which sealing gaskets (71) disposed on the bottom edge of the first leaf or on the top edge of the second leaf co-operate with the top edge of the second leaf or with the bottom edge of the first leaf, so as to provide sealing between the bottom edge of the first leaf and the top edge of the second leaf.

5. An opening and closing skirt according to claim 4, in which the fender (12) is fixed over the length of the first leaf, grasping means (13) being provided through the fender so as to enable the flap to be handled, and so as to provide access to the portion (85) of the second locking means (6) that is fixed to the first leaf.

6. An opening and closing skirt according to any preceding claim, in which the flap is removable.

## Patentansprüche

1. Öffnungs- und Schließklappe für den unteren Teil eines Wagenverkleidung, die eine Faltklappe (1, 2) aufweist, welche um ein Gelenk (4) kippen kann, das an ihrem unteren Rand befestigt ist, und die durch Verriegelung in der geschlossenen Stellung gehalten werden kann, die aufweist:
- einen ersten (1) und einen zweiten Flügel (2), die zweite Gelenkmittel (3) aufweisen, die am unteren Rand des ersten Flügels (1) und am oberen Rand des zweiten Flügels (2) befestigt sind, wobei der zweite Flügel erste Gelenkmittel (4) aufweist, die am unteren Rand des zweiten Flügels befestigt sind und mit einem Wagenverkleidung (8) verbunden werden sollen,
wobei die Klappe gekennzeichnet ist durch:
- erste Verriegelungsmittel (5a, 5b), die entweder nur am ersten Flügel oder nur am zweiten Flügel oder auf dem ersten und dem zweiten Flügel befestigt sind,
- zweite Verriegelungsmittel (6), die auf dem ersten und dem zweiten Flügel befestigt sind, zum Beispiel am unteren Rand des ersten Flügels und am oberen Rand des zweiten Flügels, wobei die zweiten Verriegelungsmittel eine in Bezug auf den zweiten Flügel definierte Stellung des ersten Flügels erlauben sollen, und
- dritte Verriegelungsmittel (7), die am zweiten Flügel und am ersten Flügel so befestigt sind, daß sie die Verriegelung der Flügel gewährleisten, wenn sie übereinandergefaltet sind.

2. Öffnungs- und Schließklappe nach Anspruch 1, bei der Haltemittel (9) mit ihrem zweiten Ende (10) am zweiten Flügel (2) und mit ihrem ersten Ende (11) an Führungsmitteln (14) befestigt sind, die an der Verkleidung (8) des Wagens befestigt sind, derart, daß das zweite Ende (10) der Haltemittel (9) es diesen Haltemitteln erlaubt, zu schwenken, und daß das erste Ende (11) der Haltemittel entlang der Führungsmittel (14) gleiten kann.

3. Öffnungs- und Schließklappe nach Anspruch 2, bei der Dichtungen (71) mit dem Umfang der Zugangsöffnung des Abteils zusammenwirken, um die Dichtheit zwischen dem ersten und dem zweiten Flügel und entlang des Umfangs der Zugangsöffnung des Abteils zu gewährleisten.

4. Öffnungs- und Schließklappe nach Anspruch 3, bei der Dichtungen (71), die am unteren Rand des ersten Flügels oder am oberen Rand des zweiten Flügels angeordnet sind, mit dem oberen Rand des zweiten Flügels oder dem unteren Rand des ersten Flügels zusammenwirken, um die Dichtheit zwischen dem unteren und dem oberen Rand des ersten und des zweiten Flügels zu gewährleisten.

5. Öffnungs- und Schließklappe nach Anspruch 4, bei der ein Stoßfänger (12) über die Länge eines ersten Flügels befestigt ist, wobei Greifmittel (13) im Stoßfänger ausgebildet sind, um die Handhabung der Faltklappe zu gewährleisten und um zu dem Teil (85) der zweiten Verriegelungsmittel Zutritt zu erlangen, die am ersten Flügel befestigt sind.

6. Öffnungs- und Schließklappe nach einem beliebigen der vorhergehenden Ansprüche, bei der die Faltklappe abgenommen werden kann.
